# EUROPEAN PATENT APPLICATION

(11) **EP 4 588 822 A1**
(43) Date of publication of application: **23.07.2025**
(21) Application number: 24153049.2
(22) Date of filing: 22.01.2024
(51) Int. Cl.: B65G 1/02, B65G 1/04

(54) **LEVELING FOOT**

(71) Applicant: AUTOSTORE TECHNOLOGY AS, 5578 Nedre Vats (NO)
(72) Inventor: Fjeldheim, Ivar, 5578 Nedre Vats (NO); Austrheim, Trond, 5578 Nedre Vats (NO)
(74) Representative: Kilburn & Strode LLP

(57) **Abstract**

A leveling device and method for erecting and leveling the framework structure of an automated storage and retrieval system. The leveling device has a base member and a support member for supporting an upright member of the framework structure. Guide structures on the support member create gap between the guide structure and an upright member resting on the support member, into which gap may be inserted a rectangular spacer frame in the dimensions of a storage column, used to correctly space the upright members.

## Description

### TECHNICAL FIELD

The present invention relates to an automated storage and retrieval system for storage and retrieval of containers, in particular to a leveling foot for installing a framework structure of an automated storage and retrieval system on an uneven surface, a leveling system and a method of leveling a framework.

### BACKGROUND

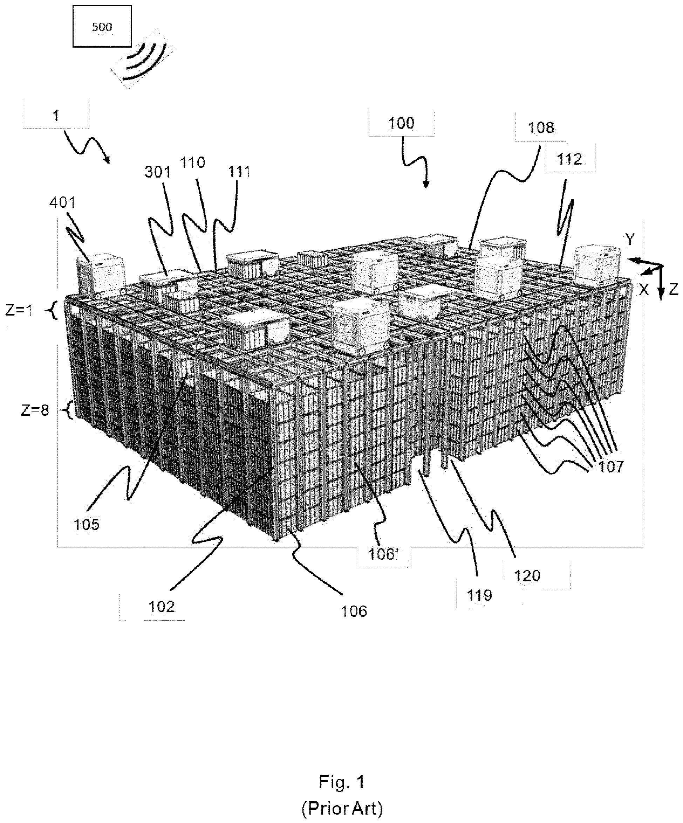

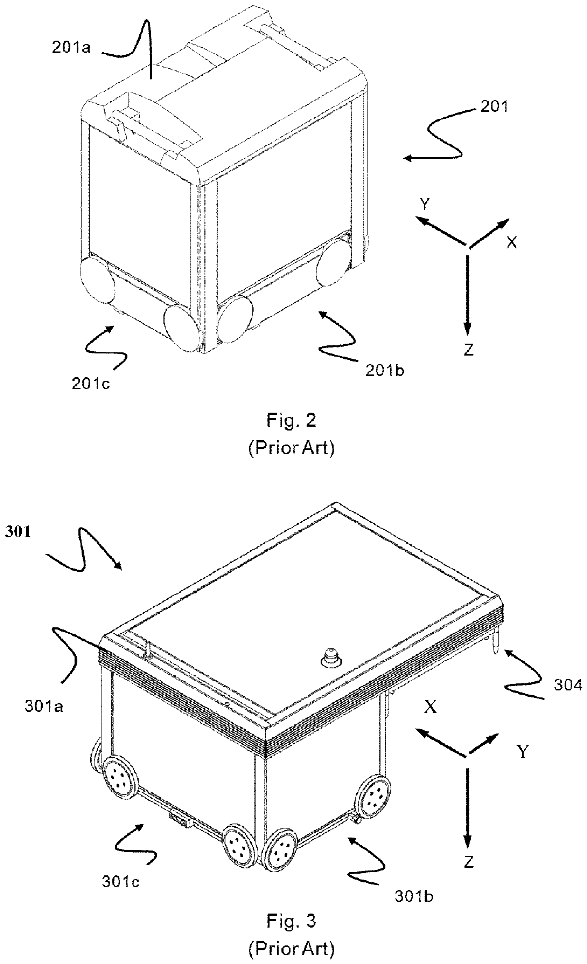

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X*-*Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

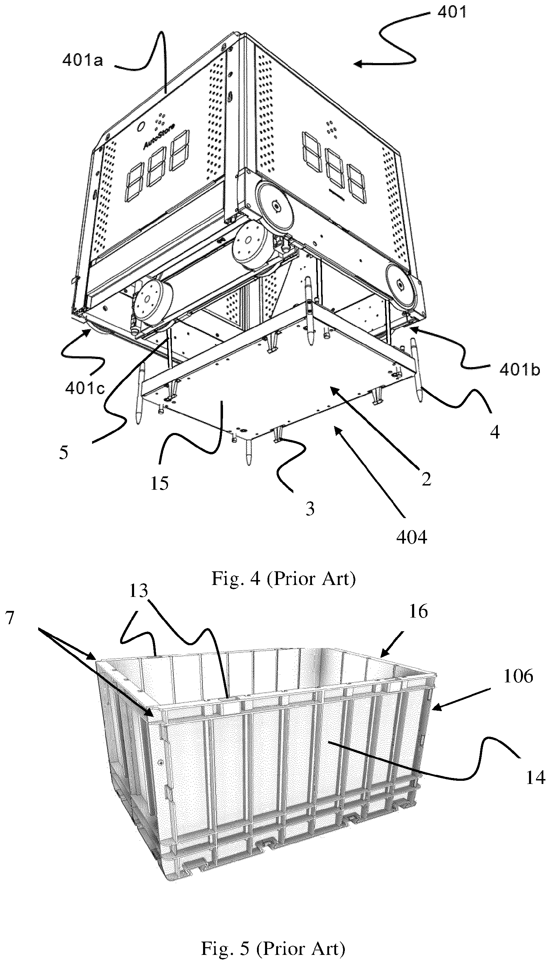

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction Z which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, Z=1 identifies the uppermost layer available for storage containers below the rails 110,111, i.e. the layer immediately below the rail system 108, Z=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1*...n* identifies the position of each storage column 105 in the horizontal plane. Consequently, as an example, and using the Cartesian coordinate system *X*, *Y*, *Z* indicated in Fig. 1, the storage container identified as 106' in Fig. 1 can be said to occupy storage position *X*=17, *Y*=1, *Z*=6. The container handling vehicles 201,301,401 can be said to travel in layer Z=o, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y*-direction, while each storage cell may be identified by a container number in the *X*-, *Y*- and Z-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2O15/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

A framework structure of an automated storage and retrieval system must be installed within tight tolerances. The upright members that define storage columns in which stacks of containers are arranged must be installed very precisely so that the storage columns have the correct dimensions. In addition, the rail system on which the automated vehicles travel must be level within predefined limits in order for the automated vehicles to operate properly and reliably, which places requirements on the evenness of the floor on which the framework structure is erected.

One of the measures used to install the framework within the above-described tolerances is to use vertically-adjustable leveling feet under the upright members to level the framework structure. The leveling feet must be very accurately aligned on the floor of the facility where the framework is to be erected in order to ensure the storage columns have the correct dimensions..

A prior art method of installing a framework structure 100 currently comprises laying out a grid of perpendicular floor rails, the intersections of the rails indicating the proper positioning of the upright members. At each intersection is placed a leveling foot of the type described in WO 2017/198784 A1 with each upright member resting upon and being supported by a leveling foot. The upright member rests upon a support member that is vertically adjustable in relation to a base member. A wedge member is insertable between the support member and base member to lock the support member in place. The leveling foot has a base section with a raised, hollow column. A spring is arranged in the hollow column. A moveable top piece engages the column, and is movable in the vertical direction against the force of the spring. The top piece is slightly larger than the column, such that side walls of the top piece overlap the sides of the column when the spring is compressed. The bottom edges of the side walls of the top piece are angled. A generally U-shaped wedge device is provided that may be pressed into engagement with the base section, whereby a leg of the U engages each side of the column. The top surfaces of the legs of the U-shaped device are angled in the form of wedges, the angles of the top surfaces of the legs corresponding to the angles of the side walls of the movable top piece, such that the side walls of the top piece will rest upon the angled top surfaces of the legs of the wedge device when the top piece is under load.

While the wedge member from the leveling foot of WO 2017/198784 A1 may adjust the height of the support member to a certain degree, the prior art leveling foot and installation method cannot compensate for deviations exceeding certain limits. This often requires that the floor of the facility be resurfaced prior to installation of the framework structure. Presently, deviations from level typically of 3mm or less across the footprint of the framework structure are required.

The present invention seeks to overcome or ameliorate to certain degree the problems associated with the prior art..

### SUMMARY

According to a first aspect, there is provided a leveling foot for leveling a framework structure of an automated storage and retrieval system, the leveling foot comprising: a base member; a column projecting vertically from the base member; a support member vertically moveable along the column, the support member having a support surface arranged to support an upright member of the framework structure; and a base member arranged to receive a wedge member insertable between the base member and the support member to set a vertical distance between the support surface and a floor of a facility on which the framework structure is erected.

The base member may receive wedge members of different sizes and slopes. The wedge members may have a plurality of different thicknesses in the vertical direction and/or slopes of inclined surfaces, whereby a desired maximum vertical distance of the support surface from the floor may be selected by selecting a particular wedge member from a plurality of wedge members having a thickness and/or slope corresponding to the desired maximum distance.

The leveling foot according to the invention may be used for leveling upright members of a framework structure of an automated storage and retrieval system. Such a framework structure may comprise a plurality of spaced apart upright members arranged on a floor. The upright members maybe made of a metal material, e.g. in the form of extruded aluminum profiles. The upright members define a plurality of storage columns for stacking storage containers on top of each other.

A rail system may be arranged across the top of the framework structure. The rail system may have two sets of rails arranged perpendicularly to each other to form a grid with a grid opening substantially above each storage column. The rails may be attached to top sections of the upright members. The rails guide a plurality of container handling vehicles on the framework structure, as explained in the background above. The container handling vehicles may be operated on the rails to raise storage containers from, and lower storage containers into, the storage columns, and also to transport the storage containers above the storage columns. By using a plurality of leveling feet for supporting the upright members, i.e. one leveling feet for each upright member, the upright members may be levelled precisely to adjust the orientation of the top sections of the upright members and thus, of the rail system.

The base member of a leveling foot is to be placed on the floor, on which the framework structure is to be erected. When placing the base member on the floor, the column of the base member projects vertically upwards into a direction facing away from the floor. A support member can be placed on the column. For this, the support member comprises a profile that is complementary to the column. For instance, the support member may comprise a hole, into which the column can be inserted or through which it may extend. The support member is vertically movable/slidable along the column to assume different distances to the floor.

A wedge member is insertable between the support member and the base member in order to adjust the height of the support surface above the floor of the facility. By selecting from a number of different wedge members, a great range of different heights can be realized. The range of heights can be determined by the vertical thickness of the wedge member and the slope of an inclined portion of the wedge member.

Due to the footprint of the support member, an improved stability for supporting the upright members is achieved. In addition, the increased footprint allows to arrange support plates as a bottom surface of each storage column. Such a support plate may rest on corners of the support members of four leveling feet belonging to four upright members that define one storage column. Storage containers to be stored in the storage columns may then be arranged in a level even if floor deviations exceed three mm. Grippers of container handling vehicles will still be able to engage and move the storage containers.

Preferably, a plurality of differently sized wedge members having different vertical thicknesses and/or differently sloped inclined surfaces is provided. Each different wedge member may permit the support member of a leveling foot to be arranged with its support surface at a different maximum height within a range of heights, depending upon the wedge member that is inserted in the device. The vertical column of the base member may have a height that accommodates the maximum vertical height of the support member provided by the largest wedge member of the plurality of wedge members.

The support member may be a platform having a surface area equal to or greater than a footprint of an upright member of the framework structure. The platform may have a substantially rectangular supporting surface. Optionally, the supporting surface may have rounded edges. The supporting surface may be attached to a frame portion of the support member, which frame portion may be placed on the column. To provide a sufficient rigidity, at an underside of the supporting surface, a stiffening structure may be placed. The stiffening structure may comprise a plurality of upright profile members connected to both the frame portion and the supporting surface. The size of the supporting surface and of the base member may be substantially identical. The size of the supporting surface may be configured to receive a support plate as mentioned above. The supporting surface may thus provide a certain portion, on which the support plate may rest and through which the load of the stack of storage containers can be transferred into the base element.

The column may have a height arranged to extend beyond a column-like extension extending from the support member when the wedge member is in place. The column may have a height arranged to accommodate the greatest maximum vertical distance achieved by the wedge member and/or different support member. The plurality of wedge members may have a plurality of different thicknesses and/or slopes. The leveling foot may be a part of a kit that includes several sets of wedges. To minimize the variety of base members, the base member may be designed to have a column that fits for all different wedge members.

When arranging a plurality of leveling feet on a floor to install the framework structure the feet may be individually leveled before placing the upright members on them. For a height adjustment, a laser or similar equipment may be used. If one foot is too low, the respective wedge may be moved or a different wedge used to adjust the foot.

The wedge member may comprise a plurality of locking teeth arranged to engage with corresponding locking teeth arranged on or in connection with the base member. The wedge may have a generally U-shaped geometry, wherein the legs of the wedge enclose the base member and the support member. The support member may comprise corresponding geometric features for engaging with the locking teeth of the wedge. After aligning the support member relative to the base member, the wedge may be attached to the other parts of the leveling foot in order to secure the orientation of the members relative to each other.

The support member may have a lower inclined surface that is configured to rest on an inclined surface of the wedge members. A plurality of different support members may be provided having their inclined surfaces arranged at different vertical distances from the support surface, such that different support members may be used interchangeably with the same base member and wedge member in order to arrange the support surface at various maximum heights.

Preferably, the leveling foot is free from a spring moving the support member relative to the base member.

The leveling foot may have a base plate which substantially corresponds to the footprint of the base support surface. The support surface is configured to support a support plate (60).

According to a second aspect, there is provided a leveling system for leveling a framework structure of an automated storage and retrieval system, the leveling system comprising a leveling foot according to the above, and a wedge member insertable between the base member and the support member.

The leveling system may comprise a plurality of wedge members having a plurality of different thicknesses in the vertical direction and/or slopes of inclined surfaces.

The leveling system may comprise one or more support plates adapted to be placed at the bottom of a storage column for supporting a stack of containers, the corners of the support plate resting on the support member of four leveling feet.

The leveling system may comprise wedge members having a plurality of different thicknesses in the vertical direction and/or slopes of inclined surfaces. A plurality of differently sized wedge members as described above may be used together with a plurality of different support members as described above to provide a system or kit permitting a variety of different heights and/or ranges of heights for the support surface above the floor, depending upon the combination of wedge member and/or support member chosen.

According to a third aspect, there is provided an automated storage and retrieval system, comprising a framework structure and a plurality of leveling feet as described above to support upright members of the framework structure.

The automated storage and retrieval system may further comprise a plurality of support plates resting on the support members of the leveling feet.

According to a fourth aspect, there is provided a method for leveling a framework structure of an automated storage and retrieval system on an uneven surface, comprising providing a plurality of leveling feet; providing a plurality of wedge members as described above, arranging a plurality of perpendicular floor rails on the floor of the facility to define a grid pattern, the grid pattern defining cells having the dimensions of storage columns, placing a leveling foot at each intersection of the floor rails, using a leveling tool to establish a desired level for the support members of the leveling feet, selecting an appropriate wedge member and inserting the wedge member between the base member and the support member, for each leveling foot, such that that all of the support members are arranged at the established level, and erecting the framework structure with upright members support by the support members, thereby defining a plurality storage columns.

The leveling tool may be a laser leveling device.

The method may comprise placing a support plate at the bottom of each storage columns, the support plate adapted to support a stack of storage containers at an elevated position above the floor of the facility.

Corners of the support plate may rest upon the support member of four leveling feet defining the storage column.

As an alternative or in addition to using floor rails, spacer frames may be used to correctly arrange the upright members of each storage column relative to each other. Accordingly, four leveling feet may be laid out in a rectangular pattern on a surface, such as a floor of a facility in which the framework is to be erected. Upright members are placed on the support members of the leveling feet and a rectangular spacer frame is connected to the four leveling feet by placing corners of the spacer frame onto corners of the support members, wherein the spacer frame may comprise corner regions that engage the support member and/or the upright member arranged on the support member. The four upright members will thereby be correctly spaced with respect to each other. Additional leveling feet and upright members may be built out from this starting point by likewise using rectangular spacer frames to complete the framework grid structure.

It should be understood that the order of assembly of the various components may be altered and still be within the scope of the invention. For example, plurality of leveling feet may be set out in a grid pattern by using rectangular spacer frames prior to upright members being arranged on top of the leveling devices that have been so laid out.

### BRIEF DESCRIPTION OF THE DRAWINGS

The following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig 5 is a detailed perspective view of a prior art upright member and a prior art leveling foot.
Fig. 6 shows a prior art leveling foot in a perspective view.
Fig 7 shows a leveling foot according to the invention in a perspective view.
Fig. 8 shows the leveling foot according to the invention in an exploded view.
Fig. 9 shows upright members placed on leveling feet in a perspective view.
Fig. 10 shows storage columns with stacked containers in a perspective view.

### DETAILED DESCRIPTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in a similar manner to the prior art framework structure 100 described above in connection with Figs. 1-5. That is, the framework structure 100 comprises a number of upright members 102, and comprises a first, upper rail system 108 extending in the X direction and Y direction.

The framework structure 100 further comprises storage compartments in the form of storage columns 105 provided between the members 102 wherein storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700×700 columns and a storage depth of more than twelve containers.

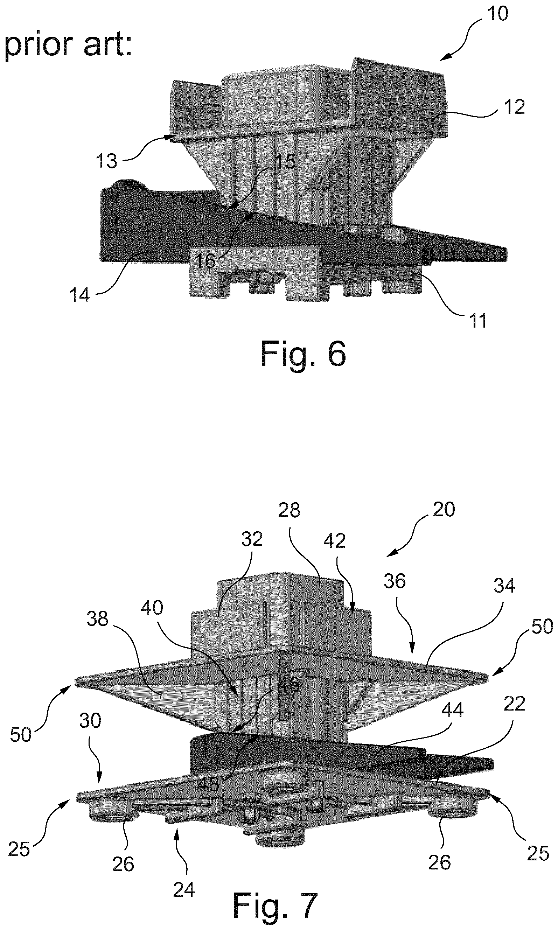

Embodiments of the invention will now be discussed in more detail with reference to Figs. 6-10.

Fig. 6 shows a leveling foot 10 according to the prior art. It comprises a base member 11 adapted for resting on a surface, such as a floor of a facility in which the framework structure 100 is to be erected. The leveling foot 10 comprises a support member 12 for supporting an upright member 102 of the framework structure 100. The support member 12 has a surface area that may roughly correspond to a surface area of the base member 11. However, both members 11 and 12 have a rectangular footprint with a short side and a long side, and the members 11 and 12 are placed on each other in opposite orientations. The footprint of both members 11 and 12 is smaller than the footprint of the upright member 102, which may have a profile cross-section that covers a square area. A lower end of the upright member can rest on the support member 12 with only a part of the end of the upright member 102 being within an outer perimeter 13 of the support member 12.

The support member 12 is vertically moveable in relation to base portion 12. A wedge member 14 arranged between the base member 11 and the support member 12 is shown. Due to an inclined upper surface 15 of the wedge member 14, a corresponding lower surface 16 of the support member 12 can be placed in a variable distance to the base member 11.

Fig. 7 shows a leveling foot 20 according to an embodiment of the invention in a perspective view. The leveling foot 20 comprises a base member 22 having a base plate 23 with a substantially square footprint. At an underside 24 of the base plate 23, four protrusions 26 are distributed to sections near corners 25 of the base plate 22. The base member 22 may thus rest on the protrusions 26 on a floor. However, the base member 22 may also be arranged on floor rails or the like.

A column 28 vertically projects from the base plate 23. Preferably, it is fixedly attached to an upper surface 30 of the base plate 23, e.g. by welding. In this exemplary embodiment, a length of the column 28 exceeds the horizontal dimensions of the base plate 23. Other varieties are possible, in which the column 28 has a greater or a lower height.

The leveling foot 20 comprises a support member 32, which is vertically movable along the column 28. It comprises a radially/horizontally projecting flat platform component 34, which has a support surface 36 on its upper side. The footprint of the platform component 34 is substantially square and substantially corresponds to the footprint of the base plate 23. The platform component 34 is supported by several flanges 38, which horizontally extend from a center part 40 to the platform component 34. The flanges 38 exemplary have a triangular shape and extend from vertical edges of the center part 40 to corners 50 of the platform component 34.

On the support surface 36, vertical guides 42 extend upwards and substantially parallel to the column 28. The platform component 34 has a cutout, through which the column 28 extends. This cutout, which is not shown in detail herein, is surrounded by the vertical guides. 42.

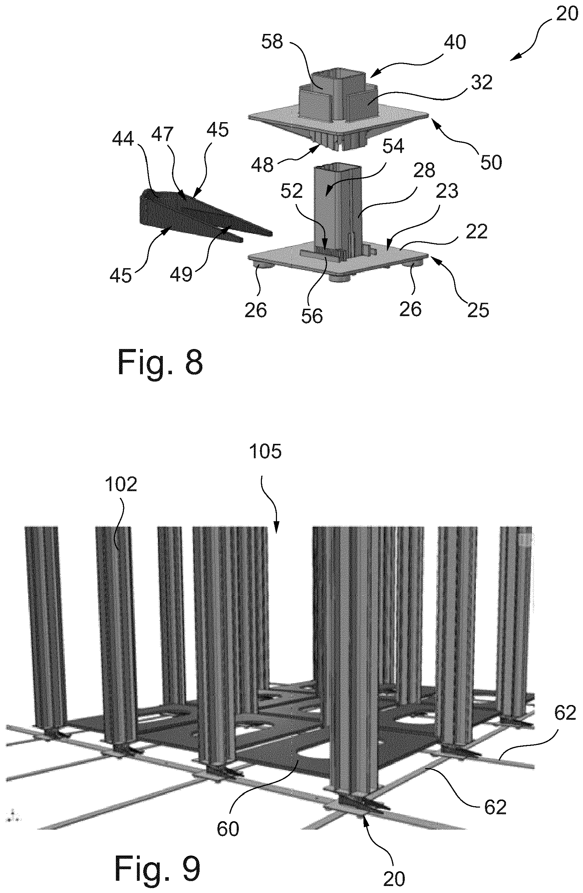

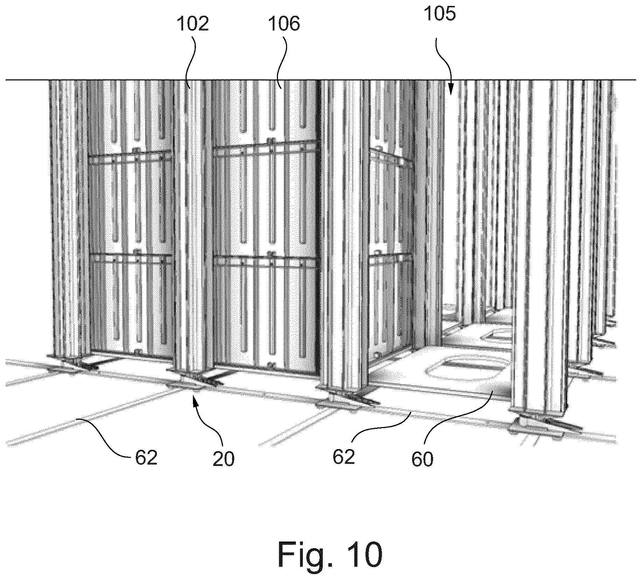

The leveling foot 20 comprises a wedge member 44, which is placed between the base member 22 and the support member 32. Exemplarily, it comprises an inclined upper surface 46, which is in surface contact with a lower inclined surface 48 of the support member 32. By providing the large platform component 34, the support of upright members is improved. Furthermore, corners 0 of the platform component 34 may be used for supporting support plates, which are shown in Figs. 9 and 10.

Fig. 8 shows the leveling foot 20 in an exploded view. All three members 22, 32 and 44 are shown individually, i.e. the leveling foot 20 is disassembled.

Here, the connection of the column 28 and the base plate 23 is shown. At a bottom side of the column 28, a series of vertical locking teeth 52 extending along a side wall 54 of the column 28 is provided. In a distance and parallel thereto, an elongated, strip-shaped guide element 56 is attached to the base plate 23. On the opposing side of the column 28 that is hidden in Fig. 8, the column 28 and the base plate 23 may comprise the same arrangement of locking teeth 52 and guide element 56.

The wedge member 44 substantially has a U shape and comprises two legs 45, which are configured to enclose the column 28. On lateral inner surfaces 47 of the legs 45, a series of vertical teeth 49 is arranged, which teeth 49 are designed complementary to the vertical locking teeth 52. By placing the wedge member 44 at the bottom side of the column 28, the teeth 49 engage the locking teeth 52, such that a horizontal position of the wedge member relative to the column 28 is locked. The legs 45 cannot be bent outwards, as they will be clamped between the guide elements 56 and the respective side wall 54 of the column 28. For placing the wedge member 44 in a desired horizontal position relative to the column 28, it may be advanced with both legs 45 enclosing the column 28 above the locking teeth 52 in a distance to the base plate 23, and afterwards moved downwards onto the base plate 23.

Then, the teeth 49 and the locking teeth 52 engage each other and the wedge member 44 cannot be moved horizontally anymore. When the upright member 102 is placed upon the upper inclined surface 48, the wedge member 44 is pressed onto the base plate 23 and thus cannot move in the vertical direction, while the support member 34 remains in a distance to the base plate 23 defined by the horizontal position of the wedge member 44.

The center part 40 of the support member 32 exemplarily comprises a vertical, hollow and column-like extension 58, which guides the support member 32 vertically on the column 28. The column 28 may thus slide inside the column-like extension 58. This improves the alignment of the support member 32 and the column 28.

Fig. 9 shows a series of upright members 102 arranged on leveling feet 20. They create a plurality of storage columns 105, wherein a support plate 60 is arranged on the corners 50 of four leveling feet 20 that define the respective storage column 105. The support plate 60 provides a bottom surface for each column 105 to receive a bottom storage container 106 of a stack of storage containers 106. The support plates 60 may be made from a metallic material, such as aluminium, or a plastic material, such as a fiber reinforced plastic material, or wood, e.g. in the form of a plywood panel. In this exemplary embodiment, all leveling feet 20 are arranged on floor rails 62.

Fig. 10 shows a plurality of storage containers 106 stacked in some of the columns 105, wherein the storage containers 106 are stacked on the respective support plates 60. For adjusting the vertical positions of the upright members 102, a kit having a plurality of base members 22, support members 34 and wedge members 44 may be provided. The base members 22 may comprise a variety of base members 22 having different heights. The wedge members 44 may comprise a variety of wedge members 44 having different heights or inclinations. This allows to level a floor that even has large height deviations.

Assembling the leveling feet 20 may include placing the base members 22 at the desired locations of the upright members 102 on the floor. Then, the support members 34 and the wedge members 44 may be arranged on the base members 22 to place the platform component 34 in a reference height. The reference height may be given by a laser device, such as a rotary laser placed on one location of the floor and projecting a laser plane in an adjustable height in the warehouse. Preferably, the laser device is a self-leveling rotary laser, which ensures the creation of a horizontal laser plane in the warehouse, which can be used to adjust the height of all support members 34 by selecting a suitable wedge member 44 and suitably placing it. If at certain locations the local height deviation of the floor is considerably large, the base member 22 at this position may be replaced by one with a larger or smaller column 28. After finishing the placement and adjustment of all leveling feet 20, the upright members 102 may be arranged in the leveling feet 20 to create the framework structure 100. The support plates 60, if desired, may be placed afterwards.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMBERS

### Prior art (figs 1-4):

- 1: Prior art automated storage and retrieval system
- 100: Framework structure
- 102: Upright members of framework structure
- 104: Storage grid
- 105: Storage column
- 106: Storage container
- 106': Particular position of storage container
- 107: Stack
- 108: Rail system
- 110: Parallel rails in first direction (X)
- 111: Parallel rails in a second direction (Y)
- 112: Access opening
- 119: First port column
- 120: Second port column
- 201: Prior art container handling vehicle
- 201a: Vehicle body of the container handling vehicle 201
- 201b: Drive means / wheel arrangement / first set of wheels in first direction (*X*)
- 201c: Drive means / wheel arrangement / second set of wheels in second direction (*Y*)
- 301: Prior art cantilever container handling vehicle
- 301a: Vehicle body of the container handling vehicle 301
- 301b: Drive means / first set of wheels in first direction (X)
- 301c: Drive means / second set of wheels in second direction (*Y*)
- 304: Gripping device
- 401: Prior art container handling vehicle
- 401a: Vehicle body of the container handling vehicle 401
- 401b: Drive means / first set of wheels in first direction (X)
- 401c: Drive means / second set of wheels in second direction (*Y*)
- 404: Gripping device
- 404a: Lifting band
- 404b: Gripper
- 404c: Guide pin
- 404d: Lifting frame
- 500: Control system

### Figs. 6-10

- 10: leveling foot (prior art)
- 11: base member (prior art)
- 12: support member (prior art)
- 13: outer perimeter (prior art)
- 14: wedge member (prior art)
- 15: inclined upper surface (prior art)
- 16: lower surface (prior art)
- 20: leveling foot (prior art)
- 22: base member
- 23: base plate
- 24: underside
- 25: corner
- 26: protrusions
- 28: column
- 30: upper surface
- 32: support member
- 34: platform component
- 36: support surface
- 38: flange
- 40: center part
- 42: vertical guide
- 44: wedge member
- 45: legs
- 46: inclined upper surface
- 47: lateral inner surfaces
- 48: lower inclined surface
- 49: tooth
- 50: corner
- 52: locking tooth
- 54: side wall
- 56: guide element
- 58: column-like extension
- 60: support plate
- 62: floor rail
- X: First direction
- Y: Second direction

## Claims

1. A leveling foot (20) for leveling a framework structure (100) of an automated storage and retrieval system, the leveling foot comprising:
a. a base member (22);
b. a column (28) projecting vertically from the base member (22);
c. a support member (32) vertically moveable along the column (28), the support member (32) having a support surface (36) arranged to support an upright member (102) of the framework structure; and
d. the base member (22) arranged to receive a wedge member (44) insertable between the base member (22) and the support member (32) to set a vertical distance between the support surface (36) and a floor of a facility on which the framework structure (100) is erected.

2. A leveling foot (20) according to claim 1, wherein the support member (32) is a platform having a surface area equal to or greater than a footprint of an upright member (102) of the framework structure.

3. A leveling foot (20) according to any of the preceding claims, wherein the column (28) has a height arranged to extend beyond a column-like extension (58) extending from the support member (32) when the wedge member (44) is in place.

4. A leveling foot (20) according to any of the preceding claims, wherein the wedge member (44) comprises a plurality of locking teeth (49) arranged to engage with corresponding locking teeth (52) arranged on or in connection with the base member (22).

5. A leveling foot (20) according to any of the preceding claims, wherein the support member (32) has a lower inclined surface (48) that is configured to rest on an inclined surface (46) of the wedge member (44).

6. A leveling foot (20) according to any of the preceding claims, wherein the leveling foot (20) has a base plate (22) which substantially corresponds to the footprint of the base support surface (36).

7. A leveling foot (20) according to any of the preceding claims, wherein the support surface is configured to support a support plate (60)

8. A leveling system for leveling a framework structure (100) of an automated storage and retrieval system, comprising:
a. a leveling foot (20) according to any of the preceding claims; and
b. a wedge member (44) insertable between the base member (22) and the support member (32).

9. A levelling system as claimed in claim 8, further comprising:
a. a support (60) plate adapted to be placed at the bottom of a storage column (102) for supporting a stack of containers (106), a corner of the support plate (60) resting on the support member (32) of the leveling foot (20).

10. A leveling system as claimed in claim 8 or 9, comprising wedge members (44) having a plurality of different thicknesses in the vertical direction and/or slopes of inclined surfaces (47).

11. An automated storage and retrieval system, comprising a framework structure and a plurality of leveling feet (20) as claimed in any of claims 1 to 7 to support upright members (102) of the framework structure.

12. An automated storage and retrieval system as claimed in claim 11, further comprising a plurality of support plates (60) resting on the support members (32) of the leveling feet (20).

13. A method for leveling a framework structure of an automated storage and retrieval system on an uneven surface, comprising:
a. providing a plurality of leveling feet (20);
b. providing a plurality of wedge members (44);
c. arranging a plurality of perpendicular floor rails (62) on the floor of the facility to define a grid pattern, the grid pattern defining cells having the dimensions of storage columns (102);
d. placing a leveling foot (20) at each intersection of the floor rails (62);
e. using a leveling tool to establish a desired level for the support members (32) of the leveling feet (20);
f. selecting an appropriate wedge member (44) and inserting the wedge member (44) between the base member (22) and the support member (32), for each leveling foot (20), such that that all of the support members (32) are arranged at the established level; and
g. erecting the framework structure (100) with upright members support by the support members (32), thereby defining a plurality storage columns.

14. A method according to claim 9, wherein the leveling tool is a laser leveling device.

15. A method according to any of claims 13 to 14, further comprising placing a support plate (60) at the bottom of each storage columns (102), the support plate (60) adapted to support a stack of storage containers (106) at an elevated position above the floor of the facility.
